Europäisches Patentamt

European Patent Office

Office européen des brevets

(19)

(11) Numéro de publication : **0 058 122
B1**

(12)

# FASCICULE DE BREVET EUROPÉEN

(45) Date de publication du fascicule du brevet :
15.05.85

(21) Numéro de dépôt : **82400223.2**

(22) Date de dépôt : **09.02.82**

(51) Int. Cl.⁴ : **F 16 F 15/32**, F 01 D 5/06

(54) **Dispositif de correction de balourd de rotor de turbomachines.**

(30) Priorité : **11.02.81 FR 8102632**

(43) Date de publication de la demande :
**18.08.82 Bulletin 82/33**

(45) Mention de la délivrance du brevet :
**15.05.85 Bulletin 85/20**

(84) Etats contractants désignés :
**DE FR GB**

(56) Documents cités :
**DE-B- 1 269 838
FR-A- 1 477 752
FR-A- 2 272 260
US-A- 4 059 972
US-A- 4 177 692**

(73) Titulaire : **SOCIETE NATIONALE D'ETUDE ET DE
CONSTRUCTION DE MOTEURS D'AVIATION,
"S.N.E.C.M.A."
2 Boulevard Victor
F-75015 Paris (FR)**

(72) Inventeur : **Lissajoux, Pierre Jean
2, Allée des Hirondelles
F-91240 Saint Michel sur Orge (FR)**
Inventeur : **Rigo, Marcel Louis Antoine
119, rue Paul Vaillant Couturier
F-91550 Paray Vieille Poste (FR)**

(74) Mandataire : **Molnat, François
S.N.E.C.M.A. Service des Brevets Boîte Postale 81
F-91003 Evry Cedex (FR)**

Jouve, 18, rue St-Denis, 75001 Paris, France

## Description

L'invention concerne un dispositif de correction de balourd de rotor de turbomachines.

Les parties tournantes des turbomachines sont généralement équilibrées avec soin lors de leur construction, toutefois, il arrive que, après montage des différents étages déjà équilibrés, les moments résiduels soient suffisants pour provoquer de légères déformations de l'arbre en rotation. Ces déformations engendrent aux grandes vitesses des vibrations et des contraintes qui affectent gravement la durée de vie de la turbomachine.

L'équilibrage d'un mobile est ordinairement obtenu par enlèvement ou apport d'une certaine masse de matière à une distance déterminée de l'axe et dans une direction définie.

Le brevet français 2 272 260 propose un dispositif de correction du balourd d'un disque de rotor constitué par un certain nombre de masses disposées à la périphérie du disque contre la jante dans laquelle sont usinées les rainures maintenant les pieds d'aube. Les masses d'équilibrage se présentent sous la forme de parallélépipèdes rectangles dont une des grandes faces porte des languettes. Les languettes se logent dans des gorges radiales prévues sur les faces latérales de crochets coplanaires avec la face radiale de la jante. Les masses sont maintenues en direction radiale entre la plateforme des aubes et un anneau élastique, l'anneau étant placé sous les masses entre les crochets et la face du disque.

Ce dispositif permet l'obtention d'un équilibrage précis tant en valeur qu'en direction et autorise le démontage éventuel des aubes sans présenter de difficultés particulières.

Cet équilibrage disque par disque laisse toutefois subsister au niveau des paliers du rotor un balourd résiduel de faible valeur qui peut être déterminé en grandeur et direction, par exemple, par le dispositif décrit dans le brevet français 1 477 752. Ce dispositif comporte un boîtier à l'intérieur duquel sont disposées deux masses en forme de secteurs circulaires coaxiaux, mobiles angulairement l'un par rapport à l'autre. Le boîtier est introduit dans l'arbre creux au niveau du palier. A l'aide de moyens prévus pour faire tourner les masses l'une par rapport à l'autre, ou solidairement, on peut créer un balourd additionnel égal au balourd résiduel et choisir la direction du balourd additionnel pour compenser exactement le balourd résiduel. Le réglage se fait à l'aide d'un outillage convenable passant dans l'arbre creux et par essais successifs, en mettant le réacteur en marche. On établit ainsi une courbe permettant de déterminer la valeur de la masse d'équilibrage et sa position. A l'aide de ces données, on procède à l'équilibrage définitif par une méthode classique par apport ou enlèvement de matière à la périphérie d'un disque.

La compensation se faisant dans un plan relativement éloigné du palier, les résultats ne sont pas aussi bons que l'on pouvait escompter et les vibrations, bien que diminuées, sont encore sensibles au niveau des paliers.

DE-B 1 269 838 concerne un dispositif d'équilibrage pour arbre de turbine dans lequel l'arbre supporté par des paliers présente axialement un alésage cylindrique portant des cannelures périphériques coopérant avec les cannelures extérieures d'une pièce creuse en forme de douilles qui peut dans certains cas constituer avec des masses d'équilibrage une pièce monobloc d'équilibrage. Ces masses sont toutefois indépendantes lorsqu'un réglage angulaire et axial doit être obtenu. La douille est maintenue en position axiale par un disque porté par un tube interne. Un tel dispositif reste toutefois insuffisant pour répondre aux objectifs de la présente invention. Le mode de fixation proposé ne peut convenir lorsqu'un arbre de turbomachine ne comporte pas un tube interne comme dans la disposition connue. Par ailleurs, la pièce d'équilibrage monobloc et son mode de fixation doivent permettre le montage, démontage et remontage après contrôle du balourd, ajustement et réglage de l'équilibrage sans procéder à aucun démontage du rotor de turbomachine en lui-même.

L'invention se propose de compenser le balourd résiduel aussi près que possible des paliers en répondant aux conditions énoncées ci-dessus et a pour objet un dispositif de correction du genre cité dans le préambule de la revendication 1 comportant dans l'alésage de l'arbre une paroi transversale portant des moyens de fixation fixés directement ou indirectement dans l'axe de l'arbre et dans lequel la pièce d'équilibrage comporte à une extrémité, un fond présentant des moyens complémentaires de fixation coopérant avec les moyens de fixation portés par la paroi transversale, et d'une tête dont une partie cylindrique, prolongeant coaxialement l'autre extrémité du corps cylindrique creux et comportant un même alésage, porte une partie excentrée dont une de ses dimensions transversales est au moins égale à la somme des rayons de la partie cylindrique et de l'alésage.

Les explications et figures données ci-après à titre d'exemple permettront de comprendre comment peut être réalisée l'invention.

La figure 1 est une vue partielle en coupe de la partie d'une turbomachine comprise entre les compresseurs basse pression et haute pression au niveau d'un palier, l'arbre étant équipé d'un dispositif selon l'invention.

La figure 2 est une vue en coupe à grande échelle d'une forme de réalisation du dispositif de correction.

La figure 3 est une vue selon III de la pièce d'équilibrage de la figure 2.

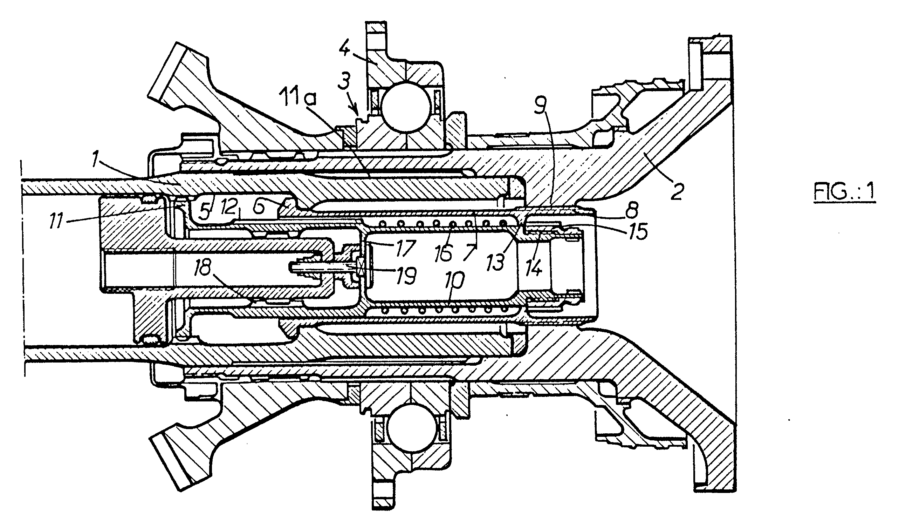

La figure 1 représente une vue partielle, en coupe d'une partie de turbomachine comprise entre les compresseurs basse pression et haute pression au niveau du palier de l'arbre du rotor. Afin de faciliter le montage et, comme il est connu, l'arbre est formé de plusieurs parties qui sont solidarisées par des moyens mécaniques dont un exemple est donné sur la figure.

L'extrémité de la partie d'arbre 1 sur laquelle sont fixés directement ou indirectement les étages basse pression, pénètre dans la partie d'arbre 2 sur laquelle sont fixés les étages haute pression. Le tronçon d'arbre 2, dans sa partie en prise avec le tronçon d'arbre 1, est supporté par un palier 3 constitué d'un roulement à billes dont les bagues extérieures 4 sont fixées indirectement au carter de la turbomachine. Les tronçons d'arbre 1 et 2 sont creux et le tronçon d'arbre 1 présente à l'intérieur un chambrage 5 sur le bord duquel vient buter la collerette 6 d'une bague de serrage 7 dont l'extrémité filetée 8 vient se visser dans un filetage intérieur 9 du tronçon d'arbre 2 du compresseur haute pression. Afin d'empêcher la rotation d'un tronçon d'arbre par rapport à l'autre, il est prévu une pièce de blocage 10 présentant sur sa surface extérieure des cannelures. Une première couronne de cannelures 11 coopère avec des cannelures correspondantes prévues dans l'alésage du tronçon d'arbre 1 et une deuxième couronne 12 coopère avec des cannelures prévues dans l'alésage de la bague de serrage 7. L'extrémité de la pièce de blocage 10 est maintenue dans un alésage 13 de la bague 7 et porte une partie filetée 14 sur laquelle vient se visser une bague 15 qui bloque la pièce 10, contre l'action du ressort 16, dans la bague de serrage 7. Du fait de la faible épaisseur des parois de la pièce de blocage 10, elle comporte approximativement à mi-longueur une paroi transversale 17. Afin de mettre en prise les cannelures de la pièce de blocage 10 à la fois avec les cannelures de l'arbre 1 et avec celles de la bague de serrage 7, il est prévu dans l'alésage de la pièce de blocage une couronne 18 de cannelures dans laquelle on introduit un outil permettant de visser ou de dévisser le filetage 8 de la bague d'une fraction de tour suffisante à l'alignement des cannelures de la pièce 10 avec celles de la bague 7 et du tronçon d'arbre 1. Les tronçons d'arbre 1 et 2 sont également solidarisés par un assemblage à cannelures 11a.

Le mode de liaison ci-dessus décrit des tronçons basse pression et haute pression de l'arbre de compresseur procure une pièce (la pièce 10) particulièrement bien adaptée pour constituer une partie du dispositif de correction de balourd selon l'invention. Les éléments de la pièce 10 nécessaires à l'invention sont la paroi transversale 17 et la couronne de cannelures 18.

Selon une forme de réalisation quelconque de l'arbre de liaison entre le compresseur basse pression et le compresseur haute pression, il devra comporter approximativement au niveau du palier et dans l'alésage une paroi transversale et des cannelures périphériques. Ces deux éléments pourront être prévus directement d'usinage dans l'arbre ou être portés par une pièce susceptible d'être solidarisée avec l'arbre.

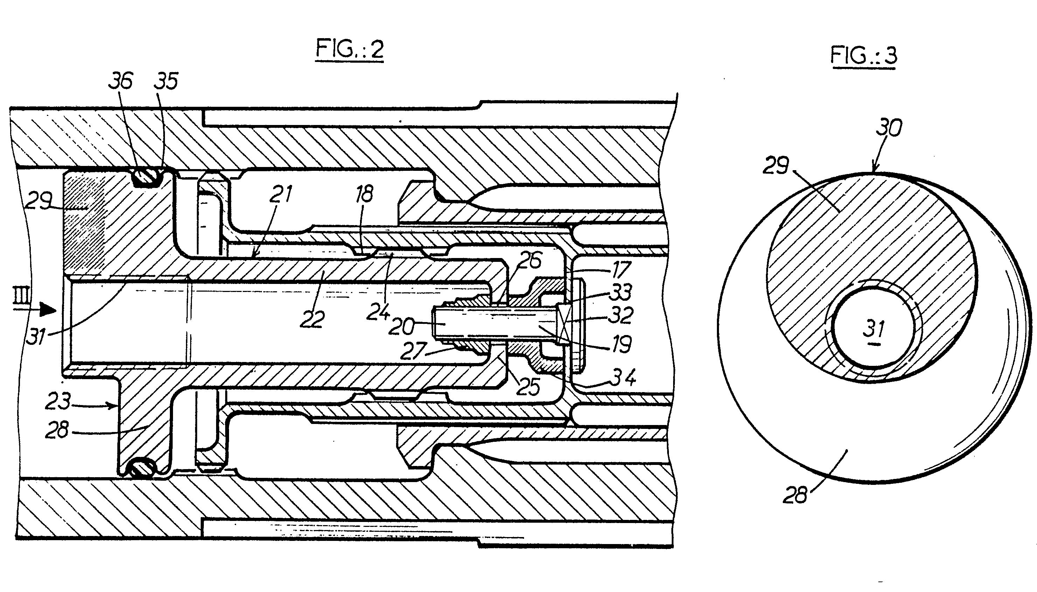

Selon l'invention, et comme représenté à plus grande échelle à la figure 2, la paroi transversale porte en son centre des moyens de fixation 19 constitués, par exemple, par un goujon dont l'extrémité est filetée. Sur cette extrémité filetée 20 vient se fixer une pièce d'équilibrage 21. Selon une forme de réalisation de l'invention, la pièce est constituée d'un corps cylindrique creux 22 et d'une tête 23 au moins partiellement cylindrique. Le corps présente sur sa surface extérieure des cannelures 24 prévues pour coopérer avec les cannelures 18 solidaires directement ou indirectement de l'arbre. A l'extrémité du corps, opposée à la tête, se trouve un fond 25 présentant des moyens complémentaires de fixation 26 coopérant avec les moyens de fixation 19. Ces moyens complémentaires sont constitués d'un orifice de diamètre correspondant à l'extrémité du goujon 19 et d'un écrou 27 imperdable ou non. La tête 23 comporte une partie cylindrique 28 et une partie excentrée 29 traversées par le prolongement de l'alésage 31 du corps cylindrique creux. Comme représenté à la figure 3, la partie excentrée 29 se présente sous forme d'un disque dont une face est solidaire de la face de la partie cylindrique et dont le diamètre est au moins égal à la somme des rayons de la partie cylindrique 28 et de l'alésage 31. La partie cylindrique et la partie excentrée sont tangentes en un point 30 de leurs bords extérieurs. Selon une forme de réalisation de la partie excentrée, non représentée, la partie excentrée se présente sous la forme approximative d'un parallélépipède rectangle dont les petites faces d'extrémité ont respectivement la forme d'un segment cylindrique prolongeant la face cylindrique de la partie cylindrique 28 et d'un segment cylindrique prolongeant la face cylindrique de l'alésage 31.

Selon la forme de réalisation représentée figure 2, les moyens de fixation 19 sont constitués par un boulon dont la partie 32 au-dessous de la tête est de forme polygonale, carrée par exemple, et pénètre dans une ouverture 33 correspondante de la paroi transversale 17. Le corps du boulon est maintenu en place dans la paroi 17 par un écrou 34, qui sert également de pièce d'appui contre laquelle la pièce d'équilibrage 21 sera serrée de la manière précédemment décrite. La partie 28 comporte une gorge 35 dans laquelle vient se loger un joint torique 36.

La mise en œuvre du dispositif de correction de balourd selon l'invention est la suivante.

La pièce d'équilibrage 21 est usinée de manière que la tête 23 et plus particulièrement la partie excentrée 29, ait une masse fonction de son épaisseur supérieur au balourd prévu. A l'aide d'un dispositif conforme, par exemple au brevet 1 477 752, on détermine les valeur et direction du balourd résiduel. On enlève alors par usinage la masse excédentaire de la partie excentrée (représentée par la partie hachurée) pour l'amener à la valeur du balourd résiduel. On introduit la pièce d'équilibrage 21 dans l'arbre 1 et on positionne angulairement la partie excentrée d'après les mesures préalables pour compenser en direction le balourd résiduel. Les cannelures de la pièce d'équilibrage 21 sont engagées dans les cannelures de l'alésage de l'arbre et on bloque la pièce 21 par l'écrou 27 sur la paroi transversale 17.

L'invention n'est bien entendu pas limitée au mode de réalisation décrit qui est appliqué à une turbomachine de type monocorps, car elle peut également s'appliquer à une turbomachine de type double-corps ou triple-corps et dans ce cas, le tronçon d'arbre 1 devient l'arbre basse-pression de la machine.

## Revendications

1. Dispositif de correction de balourd de rotor de turbomachines, ledit rotor étant monté sur un arbre cylindrique présentant axialement un alésage cylindrique portant des cannelures périphériques, ledit arbre étant mobile dans des paliers fixes, comportant une pièce monobloc d'équilibrage (21) formée d'un corps cylindrique (22) creux portant, sur sa surface extérieure, des cannelures (24) prévues pour coopérer avec les cannelures de l'alésage de l'arbre, caractérisé en ce qu'il comporte dans l'alésage une paroi transversale (17) portant des moyens de fixation (19) fixés directement ou indirectement dans l'axe de l'arbre et en ce que la pièce monobloc d'équilibrage (21) comporte, à une extrémité, un fond (25) présentant des moyens complémentaires de fixation (26, 27) coopérant avec les moyens de fixation (19) portés par la paroi transversale (17) et d'une tête (23) dont une partie cylindrique (28), prolongeant coaxialement l'autre extrémité du corps cylindrique creux, et comportant un même alésage (31), porte une partie excentrée (29) dont une de ses dimensions transversales est au moins égale à la somme des rayons de la partie cylindrique (28) et de l'alésage (31).

2. Dispositif de correction de balourd selon la revendication 1, caractérisé en ce que la partie excentrée (29) se présente sous forme approximative d'un parallélépipède rectangle dont les faces d'extrémité ont respectivement la forme d'un segment cylindrique prolongeant la face cylindrique de la partie cylindrique (28) et d'un segment cylindrique prolongeant la face cylindrique de l'alésage (31).

3. Dispositif de correction de balourd selon la revendication 1, caractérisé en ce que la partie excentrée (29) se présente sous forme d'un disque dont une face est solidaire de la face de la partie cylindrique (28) et dont la face cylindrique est tangente intérieurement à la face cylindrique de la partie cylindrique.

4. Dispositif de correction de balourd selon la revendication 2 ou 3, caractérisé en ce que la partie cylindrique (28) de la tête (23) porte une gorge (35) périphérique pour le logement d'un joint (36).

5. Dispositif de correction de balourd selon l'une des revendications 1 à 4, caractérisé en ce que les moyens de fixation (19) prévus dans la paroi transversale (17) sont constitués par un goujon (20) axial fileté sur lequel viennent s'engager les moyens complémentaires de fixation (26, 27) du fond de la pièce d'équilibrage, lesdits moyens comprenant au moins un percement (26) axial du fond (25) et un écrou (27) coopérant avec le goujon fileté (20) pour fixer la pièce dans l'arbre.

6. Dispositif de correction de balourd selon la revendication 5, caractérisé en ce que le goujon est formé par un boulon, dont la partie (32) située au-dessous de la tête présente une section polygonale coopérant avec une ouverture (33) de la paroi transversale (17) de forme complémentaire, serré sur la paroi transversale (17) par un écrou de fixation (34).

7. Dispositif de correction de balourd selon l'une des revendications 1 à 6, caractérisé en ce qu'une pièce d'appui est prévue entre la paroi transversale (17) de l'arbre et le fond (25) de la pièce d'équilibrage (21).

8. Dispositif de correction de balourd selon la revendication 7, caractérisé en ce que la pièce d'appui est constituée par l'écrou de fixation (34).

## Claims

1. A device for correcting the out-of-balance forces of the rotor of turbo machines, the said rotor being mounted on a cylindrical shaft having an axial cylindrical bore having peripheral splines, the said shaft being rotatable in fixed bearings, comprising a monobloc counter-balancing member (21) formed by a hollow cylindrical body (22) having on its external surface, splines (24) provided in order to co-operate with the splines of the bore of the shaft, characterised in this that it comprises within the bore a transverse wall (17) supporting securing means (19) directly or indirectly fixed on the axis of the shaft and in this that the monobloc counter-balancing member (21) comprises at one end, a base (25) having complementary securing means (26, 27) co-operating with the securing means (19) carried by the transverse wall (17) and a head (23) of which one cylindrical part (28), extends coaxially to the other end of the cylindrical hollow body, and comprising a common bore (31), carrying an eccentric part (29) of which one of its transverse dimensions is at least equal to the sum of the radii of the cylindrical part (28) and of the bore (31).

2. A device for correcting out-of-balance forces according to claim 1, characterised in this that the eccentric part (29) has approximately the form of a parallelopiped rectangle of which the end faces have respectively the form of a cylindrical segment extending the cylindrical face of the cylindrical part (28) and by a cylindrical segment extending the cylindrical face of the bore (31).

3. An out-of-balance forces correcting device according to claim 1, characterised in this that the eccentric part (29) has the form of a disc of which one face is rigid with the face of the cylindrical part (28) and of which the cylindrical face is internally tangential to the cylindrical face of the cylindrical part.

4. An out-of-balance forces correction device according to claim 2 or 3, characterised in this that the cylindrical part (28) of the head (23) carries a peripheral groove (35) for the location of a seal (36).

5. An out-of-balance forces correction device according to one of claims 1 to 4, characterised in this that the securing means (19) provided in the transverse wall (17) are constituted by an axially threaded gudgeon (20) on which engage the complementary securing means (26, 27) of the base of the balancing part, the said means comprising at least one axial hole (26) of the base (25) and a nut (27) co-operating with the screw threaded gudgeon (20) in order to fix the part on the shaft.

6. An out-of-balance forces correcting device according to claim 5, characterised in this that the gudgeon comprises a bolt, of which the part (32) disposed beyond the head has a polygonal section co-operating with an opening (33) of the transverse wall (17) of complementary shape, and is locked on the transverse wall (17) by a securing nut (34).

7. A out-of-balance forces correcting device according to one of claims 1 to 6, characterised in this that an abutment part is provided between the transverse wall (17) of the shaft and the base (25) of the counter balancing part (21).

8. An out-of-balance correcting device according to claim 7, characterised in this that the abutment part is constituted by the securing nut (34).

## Patentansprüche

1. Auswuchteinrichtung für den Läufer eines Gasturbinentriebwerks, der auf einer zylindrischen Welle angeordnet ist, die eine zylindrische Axialbohrung mit Umfangsnuten aufweist, wobei die Welle sich in feststehenden Lagern dreht und ein einstückiges Auswuchtteil (21) trägt, das aus einem Hohlzylinder (22) besteht, an dessen Außenseite sich Nuten (24) befinden, die mit den Nuten der Wellenbohrung zusammenwirken, dadurch gekennzeichnet, daß sich in der Bohrung eine Querwand (17) mit Befestigungsmitteln (19) befindet, die unmittelbar oder mittelbar in der Achse der Welle befestigt sind, und daß das einstückige Auswuchtteil (21) an seinem einen Ende einen Boden (25) aufweist, an dem sich komplementäre Befestigungsmittel (26, 27) befinden, die mit den von der Querwand (17) getragenen Befestigungsmitteln (19) zusammenwirken, und außerdem ein Kopfstück (23) besitzt, bei dem ein zylindrischer Teil (28), der das andere Ende des Hohlzylinders koaxial fortsetzt und eine ebensolche Bohrung aufweist, einen exzentrisch angeordneten Abschnitt (29) trägt, dessen eines Quermaß mindestens gleich der Summe der Halbmesser des zylindrischen Teils (28) und der Bohrung (31) ist.

2. Auswuchteinrichtung nach Anspruch 1, dadurch gekennzeichnet, daß der exzentrisch liegende Abschnitt (29) ungefähr die Form eines rechtwinkligen Parallelepipeds hat, dessen Endflächen die Form eines die Zylinderfläche des zylindrischen Teils (28) verlängernden Zylindersegments bzw. eines die Zylinderfläche der Bohrung (31) verlängernden Zylindersegments haben.

3. Auswuchteinrichtung nach Anspruch 1, dadurch gekennzeichnet, daß der exzentrisch liegende Abschnitt (29) die Form einer Scheibe hat, deren eine Seite mit der Seite des zylindrischen Teils (28) einstückig verbunden ist und deren Zylinderfläche die Zylinderfläche des zylindrischen Teils innen berührt.

4. Auswuchteinrichtung nach Anspruch 2 oder 3, dadurch gekennzeichnet, daß der zylindrische Teil (28) des Kopfstücks (23) eine Umfangsnut (35) für die Aufnhame einer Dichtung (36) aufweist.

5. Auswuchteinrichtung nach einem der Ansprüche 1 bis 4, dadurch gekennzeichnet, daß die in der Querwand (17) vorgesehenen Befestigungsmittel (19) von einem axialen Gewindebolzen (20) gebildet sind, an dem die komplementären Befestigungsmittel (26, 27) für den Boden des Auswuchtteils angreifen, die aus mindestens einer axialen Durchbrechung (26) des Bodens (25) und einer Mutter (27) bestehen, die mit dem Gewindebolzen (20) zusammenwirkt, um das Teil in der Welle zu befestigen.

6. Auswuchteinrichtung nach Anspruch 5, dadurch gekennzeichnet, daß der Bolzen als Schraubbolzen mit Mutter ausgebildet ist, bei dem der unter dem Kopf liegende Abschnitt (32) einen Polygonquerschnitt besitzt und mit einer Öffnung (33) von komplementärer Gestalt in der Querwand (17) zusammenwirkt und der mit einer Haltemutter (34) an der Querwand (17) befestigt ist.

7. Auswuchteinrichtung nach einem der Ansprüche 1 bis 6, dadurch gekennzeichnet, daß zwischen der Querwand (17) der Welle und dem Boden (25) des Auswuchtteils (21) ein Stützteil vorgesehen ist.

8. Auswuchteinrichtung nach Anspruch 7, dadurch gekennzeichnet, daß das Stützteil von der Haltemutter (34) gebildet ist.

FIG.:1

FIG.:2

FIG.:3

0 058 122